# EUROPÄISCHE PATENTSCHRIFT

(11) **EP 1 466 104 B1**
(45) Veröffentlichungstag und Bekanntmachung des Hinweises auf die Patenterteilung: **25.05.2005**
(21) Anmeldenummer: 03753433.6
(22) Anmeldetag: 19.09.2003
(51) Int. Cl.: F16C 33/08

(54) **GLEITLAGERSCHALE UND VERFAHREN ZUM HERSTELLEN EINES HALTEVORSPRUNGS BEI EINER GLEITLAGERSCHALE**
PLAIN BEARING SHELL AND METHOD FOR PRODUCING A HOLDING PROJECTION ON A PLAIN BEARING SHELL
COUSSINET DE PALIER LISSE ET PROCEDE DE REALISATION D'UN ELEMENT DE RETENUE EN SAILLIE POUR COUSSINET DE PALIER LISSE

(30) Priorität: 09.10.2002 DE 10246976
(43) Veröffentlichungstag der Anmeldung: 13.10.2004
(73) Patentinhaber: KS Gleitlager GmbH, 68789 St. Leon-Rot (DE)
(72) Erfinder: CASPERS, Gerhard, 76669 Bad Schönborn (DE); SCHUBERT, Werner, 69168 Wiesloch (DE); GRÖNNIGER, Bernhard, 46716 Meppen (DE)
(74) Vertreter: Friz, Oliver
(86) Internationale Anmeldenummer: PCT/EP2003/010446
(87) Internationale Veröffentlichungsnummer: WO 2004/036073

(56) Entgegenhaltungen:
- DE-A- 3 230 700
- DE-A- 3 618 742
- US-A- 4 488 826
- US-A- 5 727 885
- PATENT ABSTRACTS OF JAPAN Bd. 0071, Nr. 77 (M-233), 5. August 1983 (1983-08-05) -& JP 58 081223 A (TAIHOU KOGYO KK), 16. Mai 1983 (1983-05-16)

## Beschreibung

Die Erfindung betrifft eine Gleitlagerschale zur Lagerung einer Kurbelwelle oder einer Nockenwelle oder als Motorpleuellagerschale, mit einem nach radial außen vorspringenden Haltevorsprung im Bereich der Trennfläche der Gleitlagerschale.

Es ist bereits seit langem bekannt und üblich, bei Kurbelwellengleitlagerschalen bei Verbrennungsmotoren im Bereich der Trennflächen nach radial außen vorspringende Haltevorsprünge oder -nocken auszubilden. Sie dienen einerseits als Einbauhilfe, damit die Gleitlagerschalen korrekt im Motorblock positioniert und verbaut werden können. Sie verhindern aber auch, dass die Gleitlagerschalen im verbauten Zustand während des Motorbetriebs in Umfangsrichtung sich verdrehen oder gar in axialer Richtung auswandern können.

Es war seit langem bekannt, die Haltevorsprünge im Bereich der Trennflächen als nach radial außen gerichtete Ausklinkungen mittels eines Stanzwerkzeugs, welches von radial innen also von der Gleitfläche der Gleitlagerschale her, angesetzt wird, auszubilden. Diese Art der Ausbildung der Haltevorsprünge erweist sich jedoch insoweit als nachteilig, als im Bereich der Gleitfläche oder Lagerfläche eine Öffnung zur Trennfläche hin mit scharfen Kanten gebildet wird, die dann wieder in aufwendiger Weise verrundet werden müssen, jedoch nichtsdestoweniger eine Unterbrechung der Gleitfläche darstellten.

Es wurde daher mit DE 32 30 700 C 2 bereits der Vorschlag unterbreitet, den Haltevorsprung ohne Ausbildung einer Unterbrechung an der Gleitfläche, d. h. ohne die Gleitfläche in Mitleidenschaft zu ziehen, dadurch auszubilden, dass die betreffende Trennfläche der Gleitlagerschale in einem radial äußeren und axial begrenzten Bereich gestaucht wird, sodass bei geeignetem Gegenhalten von der inneren Gleitfläche her Material nach radial außen verformt wird und hierdurch den Haltevorsprung bildet. Selbstverständlich muss hierbei die Lagerschale auch im Bereich ihrer Außenseite durch ein geeignetes Werkzeug gestützt werden. Bei Gleitlagerschalen mit einem auf diese Weise hergestellten Haltevorsprung liegt die gestauchte Fläche des Haltevorsprungs zwangsläufig tiefer als die betreffende Trennfläche der Gleitlagerschale. Ferner liegt der Vorsprung insgesamt tiefer, also etwas weiter von der Ebene der betreffenden Trennfläche entfernt als dies beispielsweise bei dem an erster Stelle genannten Verfahren der Fall ist. Dies bedeutet, dass auch die Lagerschalenaufnahme, wo ja eine dem Vorsprung entsprechende Ausnehmung vorgesehen werden muss, aufwendiger, nämlich tiefergehend bearbeitet werden muss. Hierfür werden regelmäßig sogenannte Scheibenfräswerkzeuge verwendet, die in Folge der notwendigerweise tiefergehenden Ausbildung der Ausnehmung bei der Lageraufnahme größer gewählt werden müssen und tiefer arbeiten müssen. Des Weiteren erweist sich eine derartige Gleitlagerschale als nachteilig bei der Montage, da der in Bezug auf die Trennflächen der Gleitlagerschale tieferliegende Haltevorsprung beim Blick auf die Trennfläche schwerer und je nach Orientierung auch nicht sichtbar ist. Die Gleitlagerschale muss in der Hand gedreht werden und so orientiert werden, dass die Lage des Haltevorsprungs einsehbar ist.

Hiervon ausgehend liegt der vorliegenden Erfindung die Aufgabe zugrunde, eine gattungsgemäße Gleitlagerschale zu schaffen, die einerseits auf wirtschaftliche Weise herstellbar ist und bei deren Herstellung die radial innere Gleitfläche nicht in Mitleidenschaft gezogen wird und bei der die vorstehend geschilderten Nachteile nicht auftreten.

Diese Aufgabe wird erfindungsgemäß, durch eine Gleitlagerschale gelöst, die dadurch gekennzeichnet ist, dass der Haltevorsprung stufenlos in die eine Trennfläche der Lagerschale übergeht und durch einen Stempel von der Außenseite der Gleitlagerschale dadurch herausgeformt ist, dass der Stempel im Bereich der Trennfläche im Wesentlichen tangential zur Gleitlagerschale und in Richtung auf die Trennfläche das Material an der Außenseite der Gleitlagerschale stauchend verformt, während an der Trennfläche ein Gegenhaltemittel angelegt ist, gegen welches das herausgeformte Material des Haltevorsprungs anläuft.

Mit der Erfindung wird also vorgeschlagen, den Haltevorsprung so auszubilden, dass er mit einer Oberfläche in der Ebene der betreffenden Trennfläche liegt, also nicht tiefer liegt als diese. Dies wird dadurch erreicht, dass das Material quasi von der entgegengesetzten Richtung her gegen die Trennfläche verformt wird. Hierfür wird ein Stempel im Wesentlichen senkrecht zur Trennfläche, was gleichbedeutend ist mit im Wesentlichen tangential zur Außenseite der Gleitlagerschale in Richtung auf die Trennfläche bewegt, und zwar so, dass er die Außenseite der Gleitlagerschale im Bereich der Trennflächen derart streift, dass Material in Richtung auf die Trennflächen und nach radial außen verdrängt wird. Das Material wird also derart gestaucht, dass es gegen das Gegenhaltemittel anläuft. Durch geeignete Werkzeugausbildung kann auch in axialer Richtung der Fluss des Materials begrenzt werden.

Es hat sich als zweckmäßig erwiesen, wenn der Haltevorsprung sich in radialer Richtung etwa um 0,5 - 2 mm, insbesondere um 0,7 - 1,7 mm über die Außenseite der Gleitlagerschale hinaus erstreckt.

Des Weiteren ist Gegenstand der vorliegenden Erfindung ein Verfahren zum Herstellen eines radial nach außen vorspringenden Haltevorsprungs bei einer Gleitlagerschale, wobei das erfindungsgemäße Verfahren die Merkmale des Anspruchs 3 aufweist.

Weitere Merkmale, Einzelheiten und Vorteile der Erfindung ergeben sich aus der zeichnerischen Darstellung und nachfolgenden Beschreibung einer bevorzugten Ausführungsform der erfindungsgemäßen Gleitlagerschale und des Verfahrens zur Herstellung des Haltevorsprungs.

In der Zeichnung zeigt
- Figur 1: eine teilweise Darstellung einer vorbekannten Gleitlagerschale;
- Figur 2: eine teilweise Darstellung einer erfindungsgemäßen Gleitlagerschale;
- Figur 3: eine Draufsicht auf die Trennfläche der Gleitlagerschale nach Figur 2.
- Figuren 4-6: verdeutlichen den Herstellungsvorgang der Gleitlagerschale.

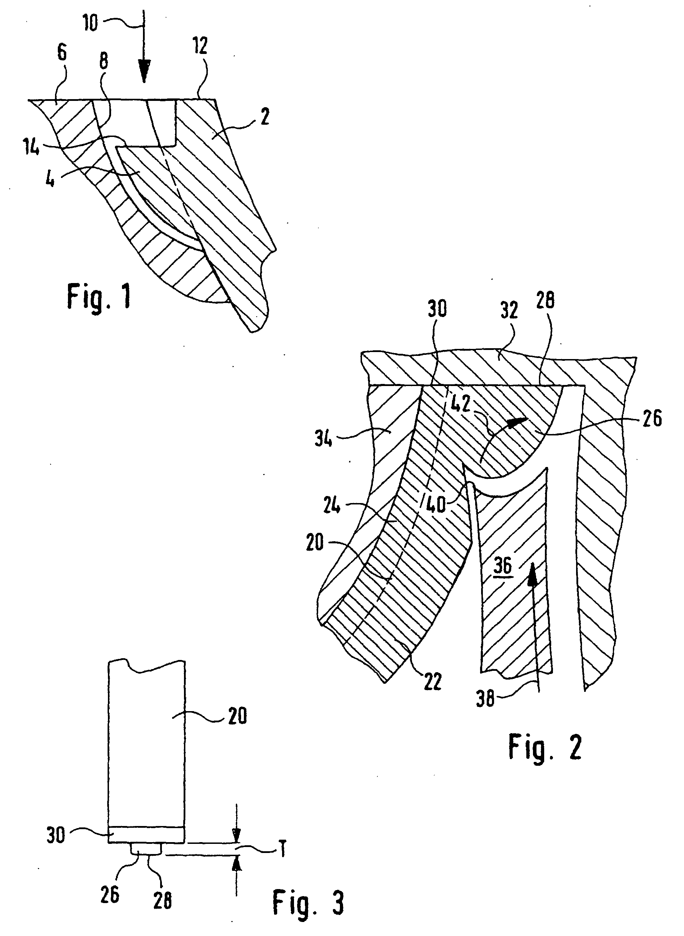

Figur 1 zeigt in schematischer Darstellung teilweise eine Gleitlagerschale 2 mit einem radialen Haltevorsprung 4 sowie eine Lageraufnahme 6 mit einer Ausnehmung 8, in welche der Haltevorsprung 4 eingreift. Der Haltevorsprung 4 ist dadurch ausgebildet, dass in Richtung des Pfeils 10, also im Wesentlichen senkrecht auf die Trennfläche 12 der Gleitlagerschale 2 ein Druck ausgeübt und Material dann im Wesentlichen in Richtung des Pfeils 10 verdrängt wurde und den Haltevorsprung 4 bildet. Man erkennt, dass eine Oberfläche 14 des Haltevorsprungs 4 "tiefer" liegt als die betreffende Trennfläche 12 der Gleitlagerschale 2. Entsprechend muss die Ausnehmung 8 der Lageraufnahme 6 ausladender, d. h. ebenfalls "tiefer" gearbeitet werden.

Figur 2 zeigt schließlich eine erfindungsgemäße Gleitlagerschale 20 ebenfalls in teilweiser schematischer Darstellung, ohne Lagerschalenaufnahme jedoch mit noch näher zu erläuternden Gegenhaltemitteln. Die Gleitlagerschale 20 weist eine Stahlstützschicht 22 sowie eine daraus in an sich beliebiger Weise aufgebrachte, insbesondere aufplattierte oder aufgegossene Lagermetallschicht 24 auf. Sie könnte aber auch als Massivwerkstoff ausgebildet sein. Man erkennt einen nach radial außen vorspringenden Haltevorsprung 26, der mit seiner zur Trennfläche hin weisenden Oberfläche 28 stufenlos in die Trennfläche 30 der Gleitlagerschale 20 übergeht. Die Oberfläche 28 des Vorsprungs 26 liegt somit in der Fläche oder Ebene der Trennfläche 30.

In Figur 2 ist ein Gegenhaltemittel 32 dargestellt, welches gegen die Trennfläche 30 angelegt ist und sich zumindest in radialer Richtung über die Trennfläche 30 hinaus erstreckt. Ferner ist ein der Innenkontur der Gleitlagerschale 20 entsprechendes Gegenhaltemittel 34 angedeutet. Ferner (schematisch) dargestellt ist ein Stempel 36, der in Richtung des Pfeils 38 in Richtung auf das Gegenhaltemittel 32 und damit im Wesentlichen senkrecht zur Trennfläche 30 bzw. im Wesentlichen in tangentialer Richtung zur Gleitlagerschale 20 bewegbar ist. Wenn vorstehend von im Wesentlichen senkrecht oder im Wesentlichen tangential die Rede ist, so ist dies dahingehend zu verstehen, dass insbesondere ± 15° Orientierung unter diesem Begriff zu subsumieren sind, wobei letzten Endes zum Ausdruck gebracht werden soll, dass der Stempel 36 so in Richtung auf die Trennfläche 30 und das Gegenhaltemittel 32 bewegt wird, dass Material an der Außenseite der Stützschicht 22 einerseits in Richtung auf die Trennfläche 30 und andererseits in radialer Richtung nach außen verdrängt wird, um den Haltevorsprung 26 zu bilden. Hierfür weist der Stempel 36 vorzugsweise eine scharfe Schneidkante 40 auf, um in die Oberfläche der Außenseite der Stützschicht 22 leicht eindringen zu können. Hierdurch wird eine Materialverdrängung in Richtung des Pfeils 42 zur Ausbildung des Vorsprungs 26 bewirkt. Der Pfeil 42 soll die Verdrängung von Material einerseits in Richtung auf die Trennfläche 30 und andererseits nach radial außen darstellen.

Die erfindungsgemäße Gleitlagerschale 20 erweist sich insoweit als vorteilhaft, als durch einen einzigen Blick auf die betreffende Trennfläche 30 der Gleitlagerschale 20 der Haltevorsprung 26 visuell erkannt werden kann. Die Montage der Gleitlagerschale ist daher vereinfacht und eine komplementäre Ausnehmung im Bereich der Lageraufnahme muss weniger tief ausgebildet werden.

Schließlich zeigt Figur 3 eine Draufsicht auf die Trennfläche 30 der Gleitlagerschale 20. Man erkennt, dass sich der Haltevorsprung 26 in radialer Richtung über eine Tiefe T von 0,8 - 1,6 mm über die Außenseite der Gleitlagerschale 20 hinaus erstreckt. Die Dicke der Gleitlagerschale kann zwischen 1,4 und 5 mm betragen.

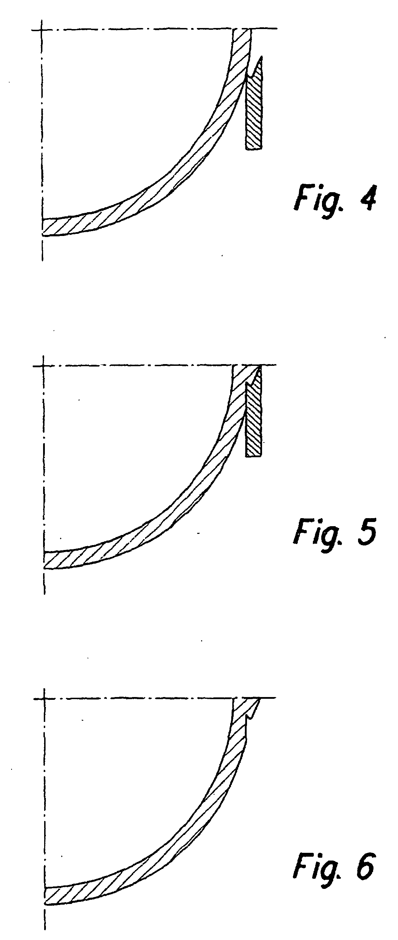

Die Figuren 4 - 6 veranschaulichen den Herstellungsvorgang, bei dem der Stempel 36 so geführt wird, dass er ungefähr in Umfangsrichtung und tangential in die Außenseite der Gleitlagerschale eingreift.

## Patentansprüche

1. Gleitlagerschale (20) zur Lagerung einer Kurbelwelle oder einer Nockenwelle eines Motors oder als Motorpleuellagerschale, mit einem nach radial außen vorspringenden Haltevorsprung (26) im Bereich einer Trennfläche (30) der Gleitlagerschale, **dadurch gekennzeichnet, dass** der Haltevorsprung (26) stufenlos in die eine Trennfläche (30) der Lagerschale übergeht und durch einen Stempel (36) an der Außenseite der Gleitlagerschale dadurch herausgeformt ist, dass der Stempel (36) im Bereich der Trennfläche (30) im wesentlichen tangential zur Gleitlagerschale und in Richtung auf die Trennfläche (30) das Material an der Außenseite der Gleitlagerschale stauchend verformt, während an der Trennfläche (30) ein Gegenhaltemittel (32) angelegt ist, gegen welches das herausgeformte Material des Haltevorsprungs (26) anläuft.

2. Gleitlagerschale (20) nach Anspruch 1, **dadurch gekennzeichnet, dass** der Haltevorsprung (26) in radialer Richtung 0,5 - 2 mm, insbesondere 0,7 - 1,7 mm über die Außenseite der Gleitlagerschale vorsteht.

3. Verfahren zum Herstellen eines radial nach außen vorspringenden Haltevorsprungs (26) bei einer Gleitlagerschale (20) zur Lagerung einer Kurbelwelle oder einer Nockenwelle eines Motors oder einer Motorpleuellagerschale, wobei der Haltevorsprung (26) im Bereich einer Trennfläche (30) der Gleitlagerschale (20) geformt wird, **dadurch gekennzeichnet, dass** mit einem Gegenhaltemittel (32) mit im wesentlichen ebener Haltefläche an der Trennfläche (30) der Gleitlagerschale gegengehalten wird, dass in der Haltekraft im Wesentlichen entgegengesetzter Richtung Material an der Außenseite der Gleitlagerschale stauchend in Richtung auf die Trennfläche (30) und dabei auch nach radial außen verformt wird.

## Claims

1. Sliding bearing shell (20) for mounting an engine crankshaft or camshaft, or as a connecting-rod bearing shell comprising a radially outwardly protruding holding projection (26) in the region of a parting plane (30) of the sliding bearing shell, **characterised in that** the holding projection (26) merges smoothly into the one parting plane (30) of the bearing shell and is shaped by a die (36) on the exterior of the sliding bearing shell **in that**, in the region of the parting plane (30), the die (36) compresses the material on the exterior of the sliding bearing shell, substantially tangentially to the sliding bearing shell and in the direction of the parting plane (30), while a counter-holding means (32), which the shaped material of the holding projection (26) abuts, is applied to the parting plane (30).

2. Sliding bearing shell (20) according to claim 1, **characterised in that**, in the radial direction, the holding projection (26) protrudes 0.5 to 2 mm, in particular 0.7 to 1.7 mm, beyond the exterior of the sliding bearing shell.

3. Method for producing a radially outwardly protruding holding projection (26) of a sliding bearing shell (20) for mounting an engine crankshaft or camshaft or a connecting-rod bearing shell, the holding projection (26) being formed in the region of a parting plane (30) of the sliding bearing shell (20), **characterised in that** a counter-holding force is exerted at the parting plane (30) of the sliding bearing shell by a counter-holding means (32) comprising a substantially plane holding surface, and **in that**, in the direction substantially opposed to the holding force, material is compressed on the exterior of the sliding bearing shell, in the direction of the parting plane (30) and therefore also radially outwardly.

## Revendications

1. Coussinet de palier lisse (20) destiné à supporter en rotation un vilebrequin ou un arbre à cames de moteur ou à servir de coussinet de bielle de moteur, ledit coussinet de palier lisse présentant un élément de retenue (26) en saillie radiale vers l'extérieur dans la région d'une surface de joint (30) du coussinet de palier lisse, **caractérisé en ce que** l'élément de retenue en saillie (26) se prolonge sans gradin en ladite surface de joint (30) du coussinet de palier lisse et est formé sur la face externe du coussinet de palier lisse à l'aide d'un poinçon (36), le poinçon (36) déformant par refoulement, dans la région de la surface de joint (30), la matière de la face externe du coussinet de palier lisse vers ladite surface de joint (30) dans une direction sensiblement tangentielle au coussinet de palier lisse tandis qu'un élément de contre-appui (32), contre lequel s'accumule la matière refoulée formant l'élément de retenue en saillie (26), est placé contre la surface de joint (30).

2. Coussinet de palier lisse (20) selon la revendication 1, **caractérisé en ce que** l'élément de retenue en saillie (26) dépasse radialement de 0,5 à 2 mm, en particulier de 0,7 à 1,7 mm, de la face externe du coussinet de palier lisse.

3. Procédé de réalisation d'un élément de retenue (26) en saillie radiale vers l'extérieur sur un coussinet de palier lisse (20) destiné à supporter en rotation un vilebrequin ou un arbre à cames de moteur ou à servir de coussinet de bielle de moteur, dans lequel l'élément de retenue en saillie (26) est formé dans la région d'une surface de joint (30) du coussinet de palier lisse (20), **caractérisé en ce qu'**il est prévu, dans la région de la surface de joint (30) du coussinet de palier lisse, un moyen de contre-appui (32) présentant une surface de maintien sensiblement plane, et **en ce que** de la matière de la face externe du coussinet de palier lisse est déformée par refoulement, dans le sens sensiblement opposé à la force de maintien, vers la surface de joint (30) et radialement vers l'extérieur.
